# FASCICULE DE BREVET EUROPEEN

(11) **EP 3 591 251 B1**
(45) Date de publication et mention de la délivrance du brevet: **27.01.2021**
(21) Numéro de dépôt: 19184739.1
(22) Date de dépôt: 05.07.2019
(51) Int. Cl.: F16D 55/36, F16D 65/00

(54) **BAGUE DE CENTRAGE ANTI-VIBRATION POUR PIED DE TUBE DE TORSION D'UN FREIN D'AERONEF ET FREIN EQUIPE D'UNE TELLE BAGUE**
SCHWINGUNGSDÄMPFENDER ZENTRIERRING FÜR FUSS DES TORSIONSROHRS EINER LUFTFAHRZEUGBREMSE, UND MIT EINEM SOLCHEN RING AUGESTATTETE BREMSE
ANTI-VIBRATION CENTRING RING FOR FOOT OF TORSION TUBE OF AN AIRCRAFT BRAKE AND BRAKE PROVIDED WITH SUCH A RING

(30) Priorité: 06.07.2018 FR 1856258
(43) Date de publication de la demande: 08.01.2020
(73) Titulaire: Safran Landing Systems, 78140 Vélizy-Villacoublay (FR)
(72) Inventeur: VITTI, Joseph, 77550 Moissy-Cramayel (FR); LE FLOCH, Romain, 91190 Villiers-le-Bacle (FR)
(74) Mandataire: Lavialle, Bruno François Stéphane

(56) Documents cités:
- FR-A1- 2 842 496
- GB-A- 2 331 135
- US-A- 6 003 641

## Description

L'invention concerne une bague de centrage anti-vibration pour pied de tube de torsion de frein d'aéronef.

### ARRIERE PLAN DE L'INVENTION

Les roues d'aéronef sont montées pour tourner sur un essieu porté par un atterrisseur. Certaines roues sont équipées de freins comportant généralement un tube de torsion enfilé sur l'essieu et sur lequel des disques de freins sont rapportés, dont des disques rotors tournant avec la roue à freiner, et des disques stators bloqués en rotation sur le tube de torsion. Des actionneurs de frein pressent sélectivement les disques pour générer un couple de freinage résultant du frottement ainsi provoqué entre les faces des disques et ainsi ralentir la roue. Les tubes de torsion comportent généralement un voile annulaire transversal comportant un pied permettant le centrage du tube de torsion sur l'essieu. Sous le pied est rapportée une bague de centrage.

On connaît du document FR2842496 des bagues de centrage comportant des zones d'appui reliées entre elles par des ligaments souples. En particulier, certaines des bagues décrites (figure 8) comportent des zones d'appui à double portée portant sur le pied du tube de torsion et sur l'essieu et s'étendant dans une plage angulaire autour d'un d'axe X sensiblement horizontal correspondant à une direction d'application d'un effort de freinage sur le pied du tube de torsion, et des zones à simple portée dont deux zones d'appui sur le pied du tube de torsion dans des plages angulaires autour d'un axe Y perpendiculaire à l'axe X correspondant à une direction d'application d'un effort d'atterrissage, et, de part et d'autre, deux zones d'appui à simple portée sur l'essieu. Les zones d'appui à simple portée ne saillent que d'un côté d'un anneau structurel donnant une rigidité annulaire à la bague.

Ces bagues de centrage anti-vibration sont donc à orientation privilégiée, ce qui limite leur capacité d'absorption vibratoire, et complexifie leur montage. Par ailleurs, on a pu constater en service que certaines bagues ont subi des déformations permanentes, notamment dans les portions de l'anneau structurel reliant les zones à simple portée entre elles.

### OBJET DE L'INVENTION

L'invention vise à proposer un frein d'aéronef avec une bague de centrage anti-vibration ne comportant pas ces inconvénients précités.

### PRESENTATION DE L'INVENTION

En vue de la réalisation de ce but, on propose un frein d'aéronef comprenant un tube de torsion ayant un pied agencé pour être centré sur un essieu d'aéronef, le frein comportant une bague de centrage anti-vibration pour centrer le pied du tube de torsion du frein d'aéronef sur l'essieu de l'aéronef, la bague de centrage comportant des zones d'appui portant alternativement sur l'essieu et sur le pied de tube de torsion en étant détalonnés du côté non porteur d'un jeu fonctionnel de sorte qu'aucune zone d'appui ne porte simultanément sur l'essieu et le pied du tube de torsion, ces zones d'appui étant reliées entre elles par des ligaments souples.

Ainsi, il n'existe plus de zones d'appui portant simultanément sur le pied et l'essieu, ce qui améliore l'absorption des vibrations. Il faut l'application d'un effort (de freinage ou d'atterrissage) pour réduire l'espace entre le pied et l'essieu de sorte que certaines des zones d'appui viennent en appui sur leurs deux faces, par déformation des ligaments souples.

Par souple, on entend que les ligaments peuvent se déformer sans subir de déformations permanentes, en restant dans leur domaine élastique.

Le jeu fonctionnel du côté non porteur est dimensionné pour pouvoir absorber les vibrations tout en empêchant la plastification des ligaments souples. On notera que contrairement à la bague du document FR2842496, toutes les zones d'appui saillent de part et d'autre de des ligaments souples. Les ligaments garantissent l'espacement angulaire des zones d'appui et forment des ressorts assurant le contact des zones d'appui respectivement sur le pied du tube de torsion ou sur l'essieu.

De préférence, la bague de centrage est obtenue par répétition circulaire d'un motif constitué d'une zone d'appui sur l'essieu, d'un premier ligament souple, d'une zone d'appui sur le pied de tube, et d'un deuxième ligament souple. La bague de centrage n'a donc plus d'orientation privilégiée, ce qui facilite grandement son montage et évite la provision d'un dispositif d'anti-rotation.

### DESCRIPTION DES FIGURES

L'invention sera mieux comprise à la lumière de la description qui suit d'un mode particulier de réalisation de l'invention, en référence aux figures des dessins annexés, parmi lesquelles :
- la figure 1 est une vue en coupe d'une roue d'aéronef équipée d'un frein d'aéronef comportant un tube de torsion avec un voile annulaire de centrage sur l'essieu ;
- la figure 2 est une vue de face d'une bague de centrage selon l'invention.

### DESCRIPTION DETAILLEE DE L'INVENTION

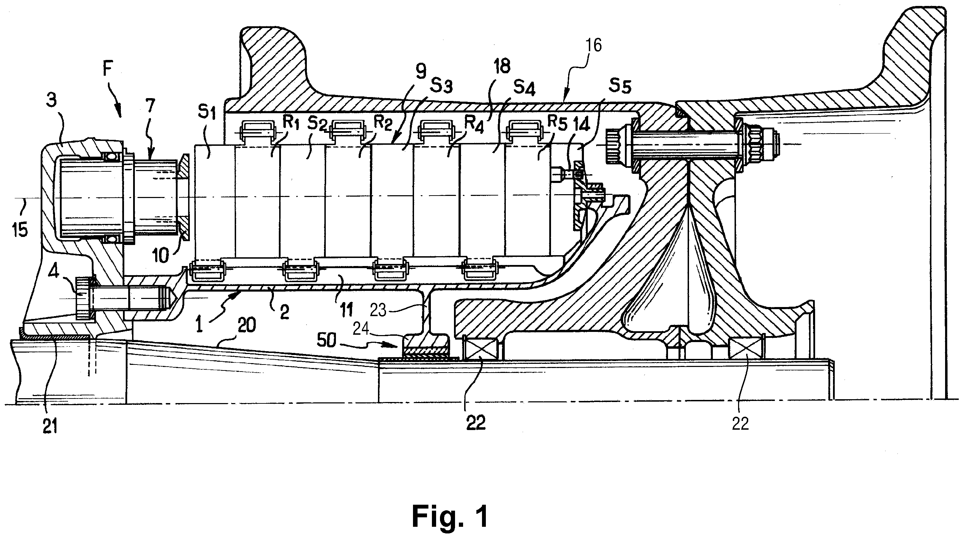

Sur la figure 1, on distingue un frein d'aéronef F comportant une partie fixe 1 incluant un tube de torsion 2 à l'avant duquel est fixée une couronne de freinage 3, par exemple au moyen de boulons 4. Ici la couronne 3 est équipée d'une pluralité d'actionneurs 7 comportant un piston 10 servant à appliquer des efforts de freinage.

La partie fixe 1 entoure coaxialement un essieu 20 sur lequel une jante de roue 16 est montée pour tourner par l'intermédiaire de roulements 22.

Le frein F comporte un empilement de disques de frein qui sont enfilés sur le tube de torsion 2. Ces disques comportent des disques stators S1, S2, S3, S4, S5 couplés en rotation au tube de torsion 2 par des tenons 11 saillant du tube de torsion 2 pour coopérer avec des tenons des disques stators, et, agencés en alternance des disques rotors R1, R2, R3, R4 couplés en rotation à la jante 16 par des barrettes 18 saillant de la jante 16 pour coopérer avec des tenons des disques rotors. La couronne 3 est centrée sur l'essieu par une première portée munie d'une bague de centrage 21. En outre, le tube de torsion 2 présente intérieurement un voile annulaire transversal 23 terminé par un pied 24 portant une bague de centrage 50 du pied 24 sur l'essieu 20.

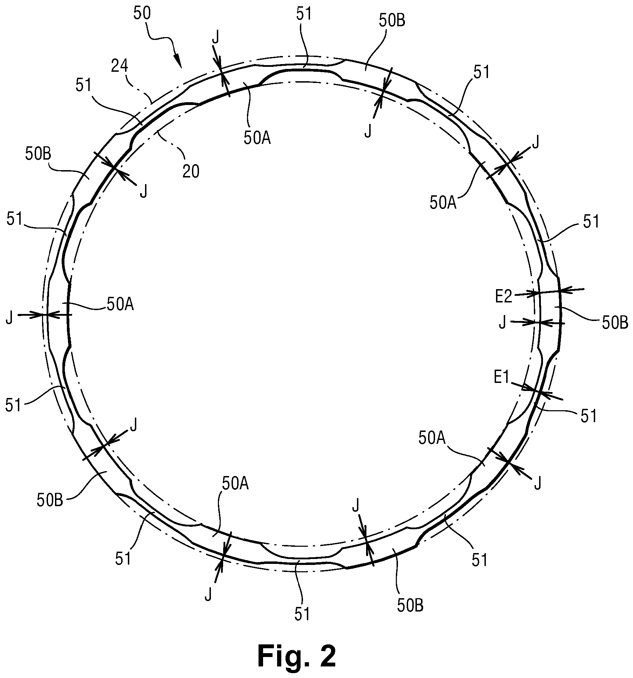

Comme cela est visible à la figure 2, la bague de centrage 50 comporte des zones d'appui 50A et 50B disposées de façon alternée et reliées entre elles par des ligaments souples 51. Les zones d'appui 50A ont une face interne portant sur l'essieu 20, tandis que les zones d'appui 50B ont une face externe portant sur le pied 24 du tube de torsion 2. Ici, les zones d'appui 50A, 50B s'étendent sur une plage angulaire d'environ 15 degrés. Les faces des zones d'appui 50A, 50B qui ne sont pas porteuses sont éloignées respectivement du pied 24 ou de l'essieu 20 d'un jeu fonctionnel J, de sorte qu'aucune zone d'appui ne porte simultanément sur le pied 24 et l'essieu 20. Il faut l'application d'un effort (de freinage ou d'atterrissage) pour réduire l'espace entre le pied 24 et l'essieu 20 de sorte que certaines des zones d'appui viennent en appui sur leurs deux faces, par déformation des ligaments souples 51. Ainsi, la bague de centrage 50 ne se comporte localement comme un palier que sous déformation suffisamment importante pour que des zones d'appui portent sur leurs deux faces. Le reste du temps et dans les zones non soumis à effort, elle sert à absorber les vibrations qui affectent les roues et freins.

Le jeu fonctionnel J minimum sous la portée détalonnée sera calculé pour optimiser l'absorption de vibrations, tandis que le jeu fonctionnel J maximal sera calculé pour éviter toute déformation permanente des ligaments souples 51 entre les zones d'appui. Ce jeu fonctionnel est typiquement plus important qu'un jeu courant de montage (type H7g6 ou similaire), et vaut typiquement quelques dixièmes de millimètres, en étant de préférence compris entre 0,2 mm et 0,8 mm. Ce jeu est bien entendu à adapter en fonction des vibrations observées.

De préférence, les zones d'appui ont une épaisseur E2 comprise entre 5 et 10 mm, alors que les ligaments souples ont une épaisseur E1 inférieure à 2 mm. De préférence les ligaments souples 51 ont une épaisseur E1 inférieure à 25% d'une épaisseur E2 des zones d'appui

Ici, les ligaments souples 51 sont sensiblement centrés dans l'espace entre le pied 24 et l'essieu 20, en étant à égale distance de ceux-ci. Les zones d'appui 50A,50B saillent de part et d'autre des ligaments 51.

Des essais et calculs ont permis de démontrer une bonne capacité de réduction des vibrations, ainsi qu'un bon fonctionnement en palier sous charges externes (freinage, atterrissage), sans générer de déformations permanentes. Aucune anti-rotation n'est nécessaire, la bague pouvant tourner en service sans perdre de capacité d'absorption vibratoire.

L'invention n'est pas limitée à ce qui vient d'être décrit, mais englobe au contraire tout variante entrant dans le cadre défini par les revendications. En particulier, bien que sur le mode de réalisation illustré, on a prévu cinq zones d'appui 50A portant sur l'essieu 20, et, alternativement, cinq zones d'appui 50B portant sur le pied 24, chaque zone d'appui s'étendant sur environ 15 degrés d'ouverture angulaire, on pourra prévoir tout nombre de zones d'appui, de toute dimension angulaire, tant que ce nombre soit au moins égal à quatre et qu'ils soient reliés par des ligaments souples. On définira de préférence la bague de centrage par répétition angulaire d'un motif comportant successivement une zone d'appui sur l'essieu, un premier ligament souple, une zone d'appui sur le pied, et un deuxième ligament souple, les premiers et deuxièmes ligaments souples n'étant pas forcément identiques.

## Revendications

1. Frein d'aéronef comprenant un tube de torsion (2) ayant un pied agencé pour être centré sur un essieu d'aéronef, le frein comprenant une bague de centrage (50) anti-vibration pour centrer le pied (24) du tube de torsion (2) sur l'essieu (20) de l'aéronef, **caractérisée en ce que** la bague de centrage comporte des zones d'appui (50A,50B) agencées pour porter alternativement sur l'essieu et sur le pied de tube de torsion en étant détalonnées du côté non porteur d'un jeu fonctionnel (J) de sorte qu'aucune zone d'appui ne porte simultanément sur l'essieu et le pied du tube de torsion, ces zones d'appui étant reliées entre elles par des ligaments souples (51).

2. Frein selon la revendication 1, dans laquelle les ligaments souples (51) sont centrées dans une zone s'étendant entre le pied (24) et le tube de torsion (2), les zones d'appui (50A,50B) saillant de part de d'autre des ligaments souples.

3. Frein selon la revendication 1, dans laquelle les ligaments souples (51) ont une épaisseur (E1) inférieure à 25% d'une épaisseur (E2) des zones d'appui (50A, 50B).

4. Frein selon la revendication 1, dans laquelle le jeu fonctionnel (J) est compris entre 0,2 mm et 0,8 mm.

5. Frein selon la revendication 1, définie par répétition circulaire d'un motif comportant successivement une zone d'appui (50A) sur l'essieu, un premier ligament souple, une zone d'appui (50B) sur le pied du tube de torsion, un deuxième ligament souple.

## Patentansprüche

1. Luftfahrzeugbremse, umfassend ein Torsionsrohr (2), das einen Fuß hat, der ausgebildet ist, um auf einer Luftfahrzeugachse zentriert zu werden, wobei die Bremse einen Antivibrations-Zentrierring (50) umfasst, um den Fuß (24) des Torsionsrohrs (2) auf der Achse (20) des Luftfahrzeugs zu zentrieren, **dadurch gekennzeichnet, dass** der Zentrierring Auflagezonen (50A, 50B) umfasst, die so ausgebildet sind, dass sie abwechselnd auf der Achse und auf dem Fuß des Torsionsrohrs aufliegen und dabei von der nicht-aufliegenden Seite um ein funktionales Spiel (J) versetzt sind, sodass keine Auflagezone gleichzeitig auf der Achse und dem Fuß des Torsionsrohrs aufliegt, wobei diese Auflagezonen miteinander über flexible Bänder (51) verbunden sind.

2. Bremse nach Anspruch 1, bei der die flexiblen Bänder (51) in einer Zone zentriert sind, die sich zwischen dem Fuß (24) und dem Torsionsrohr (2) erstreckt, wobei die Auflagezonen (50A, 50B) zu beiden Seiten der flexiblen Bänder vorstehen.

3. Bremse nach Anspruch 1, bei der die flexiblen Bänder (51) eine Dicke (E1) haben, die geringer als 25% einer Dicke (E2) der Auflagezonen (50A, 50B) ist.

4. Bremse nach Anspruch 1, bei der das funktionale Spiel (J) zwischen 0,2 mm und 0,8 mm beträgt.

5. Bremse nach Anspruch 1, die durch kreisförmige Wiederholung eines Musters definiert ist, das nacheinander eine Auflagezone (50A) zur Auflage auf der Achse, ein erstes flexibles Band, eine Auflagezone (50B) zur Auflage auf dem Fuß des Torsionsrohrs und ein zweites flexibles Band umfasst.

## Claims

1. An aircraft brake comprising a torque tube (2) having a foot arranged to be centered on an aircraft axle, the brake comprising an antivibration centering ring (50) for centering the foot (24) of the torque tube (2) on the axle (20) of the aircraft, the brake being **characterized in that** the centering ring includes bearing zones (50A, 50B) that are arranged to bear in alternation on the axle and on the torque tube foot, and that are offset on their non-bearing sides by functional clearance (J) so that no bearing zone bears simultaneously on the axle and on the foot of the torque tube, these bearing zones being connected to one another by flexible ligaments (51).

2. A brake according to claim 1, wherein the flexible ligaments (51) are centered in a zone extending between the foot (24) and the torque tube (2), the bearing zones (50A, 50B) projecting in both directions from the flexible ligaments.

3. A brake according to claim 1, wherein the flexible ligaments (51) are of thickness (E1) that is less than 25% of the thickness (E2) of the bearing zones (50A, 50B) .

4. A brake according to claim 1, wherein the functional clearance (J) lies in the range 0.2 mm to 0.8 mm.

5. A brake according to claim 1, defined by circularly repeating a pattern comprising in succession a bearing zone (50A) for bearing on the axle, a first flexible ligament, a bearing zone (50B) for bearing on the foot of the torque tube, and a second flexible ligament.
